# EUROPEAN PATENT APPLICATION

(11) **EP 4 760 062 A1**
(43) Date of publication of application: **17.06.2026**
(21) Application number: 25222481.1
(22) Date of filing: 11.12.2025
(51) Int. Cl.: F01D 25/00, F01D 25/32

(54) **METHOD AND SYSTEM FOR CLEANING A GAS TURBINE ENGINE**

(30) Priority: 13.12.2024 PL 45055524
(71) Applicant: General Electric Company, Cincinnati, Ohio 45215 (US); GE Aerospace Poland Sp. z o.o., 02-256 Warsaw (PL)
(72) Inventor: G., Rajanikanth, 560066 Bengaluru (IN); KSANDER, Jeffrey, West Chester, 45069 (US); GUNDRUM, Michael, Springdale, 45246 (US); MLYNSKI, Grzegorz, 02-256 Warsaw (PL); NAYANI, Manoj, 560066 Bengaluru (IN); CAMPBELL, Andrew, West Chester, 45069 (US); YAMARTHI, David Raju, 560066 Bengaluru (IN); GANIGER, Ravindra Shanka, 560066 Bengaluru (IN); MATHEW, Paul, 560066 Bengaluru (IN); PETKAR, Kirti Arvind, 560066 Bengaluru (IN); RAMADURAI, Krishna, 560066 Bengaluru (IN); RICCIARDI, Frank, West Chester, 45069 (US)
(74) Representative: Openshaw & Co.

(57) **Abstract**

Provided herein are systems and methods for supplying a gas to one or more portions of an engine (10) during an engine cleaning operation to limit the ingress of cleaning fluid. The systems and methods can also be used to supply the gas to the engine (10) after a cleaning operation to remove residual cleaning fluid. In some embodiments, the methods include pressurizing a bleed system (60) to limit ingress of cleaning fluid or dry the bleed system (60). The methods may use a portion of a reverse bleed apparatus (90) associated with the bleed system (60) to supply the gas to the bleed system (60). In addition, an external gas supply system (130, 150, 166, 220, 240) may be coupled to a bleed duct (74) to supply the gas. In some embodiments, the methods include pressurizing a sump system (168) of the gas turbine engine (10) to limit ingress of cleaning fluid into the sump system (168) during the cleaning operation.

## Description

### TECHNICAL FIELD

These teachings relate generally to systems and methods for cleaning a gas turbine engine.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine generally includes, in serial flow order, a compressor section, a combustor section, a turbine section, and an exhaust section. In operation, air is provided from the fan to an inlet of the compressor section where one or more axial compressors progressively compress the air until it reaches the combustor section. Fuel is mixed with the compressed air and burned within the combustor section to provide combustion gases. The combustion gases are routed from the combustor section to the turbine section. The flow of combustion gases through the turbine section drives the turbine section and is then routed through the exhaust section, e.g., to atmosphere.

During operation, a substantial amount of air is ingested by such gas turbine engines. However, such air may contain foreign particles. A majority of the foreign particles will follow a gas path through the engine and exit with the exhaust gases. However, at least certain of these particles may stick to certain components within the gas turbine engine's gas path, potentially changing aerodynamic and/or thermal properties of the engine and reducing engine performance.

### BRIEF DESCRIPTION OF DRAWINGS

Various needs are at least partially met through provision of the systems and methods for cleaning a gas turbine engine described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic view of a gas turbine engine, in accordance with an exemplary embodiment of the present disclosure;
FIG. 2A is schematic view of a bleed system of a gas turbine engine in accordance with some embodiments;
FIG. 2B is a schematic view of the bleed system of FIG. 2A coupled to an external gas supply system, in accordance with some embodiments;
FIG. 2C is a schematic view of the bleed system of FIG. 2A coupled to an external gas supply system, in accordance with some embodiments;
FIG. 2D is a schematic view of another portion of the bleed system of an aircraft system with two engines in accordance with some embodiments;
FIG. 3 is a schematic view of a sump system of a gas turbine engine coupled to an external gas supply system, in accordance with some embodiments;
FIG. 4 is a schematic view of a sump system of a gas turbine engine coupled to an external gas supply system, in accordance with some embodiments;
FIG. 5 is a schematic view of an external gas supply system, in accordance with some embodiments;
FIG. 6 is a schematic view of another external gas supply system, in accordance with some embodiments;
FIG. 7 is a block diagram of a control system for controlling a supply of gas to a gas turbine engine during and/or after a cleaning operation;
FIG. 8 is a flow diagram of a method of cleaning a gas turbine engine, in accordance with some embodiments; and
FIG. 9 is a flow diagram of a method of cleaning a gas turbine engine, in accordance with some embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Provided herein are methods and systems for protecting a gas turbine engine during a cleaning operation. In some aspects, the methods and systems provided herein use a pressurized gas supply to protect pneumatic systems such as bleed systems and/or sump systems of the engine from the ingress of cleaning fluid during a cleaning operation. For example, the pressurized gas supply can be provided to one or more of a bleed system and a sump system associated with the gas turbine engine. Such systems may be in fluid communication with an engine core and, as such, cleaning fluid may inadvertently flow or leak into and/or contaminate such systems during engine cleaning operations. Therefore, the example methods and systems disclosed herein can be used to prevent or limit such ingress of cleaning fluid into those systems to prevent or limit negative effects of the cleaning fluid in those systems.

In order to remove foreign particles from within the gas path of a gas turbine engine, water or other fluids may be directed towards an inlet of the gas turbine engine, while the core engine is cranked using, e.g., using a starter motor. During this process, foam or other cleaning fluids may inadvertently enter a bleed system or a sump of the gas turbine engine. A cleaning fluid may enter the bleed system (e.g., one or more bleed lines coupled to the core) and the valves that regulate the bleed flow to the aircraft. However, the presence of foam within the bleed system may create a cabin smell issue if a dry out of the engine is not carried out properly leading to air turnback events where the aircraft must end a flight, for example, to return to its original destination. In addition, the cleaning fluid may contact several valves that regulate the airflow within the gas turbine engine. Exposure to the cleaning fluid can compromise such valves, in some instances, impacting the reliability of the valves or resulting in malfunction/failures. Cleaning fluid entering a sump system associated with the gas turbine engine may result in oil contamination and subsequently bearing distress. Accordingly, a wash system that reduces the ingress of cleaning fluid into one or more of the bleed system and the sump system may be useful.

Additionally, cleaning operations often leave pooled fluids, such as water and/or detergents, in the gas turbine engine. Cleaning operations may have large cycle times (the time needed to completely clean the engine). On account of the long cycle times, certain cleaning operations cannot be used by all airlines due to aircraft grounding window limitations. In some instances, following a cleaning operation there is an idle period in which an idle engine run is performed to remove residual cleaning fluid that remains in the engine following a cleaning operation which may last several hours. The idle engine run may be performed to eliminate any moisture/water content in the gas turbine engine following a cleaning operation.

In some embodiments, the methods and systems that supply gas during the cleaning operation can leverage existing engine architecture, namely, a reverse bleed apparatus in the engine to supply the gas flow to eliminate or reduce the amount of remaining moisture and/or water content in the bleed system.

Also provided herein are methods and systems for removing moisture such as residual cleaning fluid from a gas turbine engine following a cleaning operation. Namely, the methods and systems provided herein use a gas supply to remove residual cleaning fluid from a bleed system, a sump system, and/or other cavities in the engine flow path or engine externals after a cleaning operation. In some embodiments, moisture can be removed using an external gas supply system that is coupled to one or more of the bleed system or the sump system of the engine. Post foam wash process, the engine is exposed to gas flow which, in some approaches, is a high temperature gas to vaporize moisture content in the engine. The gas flow can also remove any effluent remaining in the engine systems. The pressure of air can also be adjusted to provide core rotation at low rotations per minute (rpm) to assist in effluent removal.

In some embodiments, the external gas supply system comprises a microturbine. The microturbine can produce clean gas (e.g., air) at a high temperature and pressure to aid in an engine cleaning process. Alternatively, a source of pressurized gas (e.g., a gas moving device) can be used in conjunction with a heating device to provide the gas to dry the engine after the cleaning process. Using the approaches for removing cleaning fluid described herein, engine restoration time may be reduced, which reduces aircraft time-on-ground. Further, the idle run duration following a cleaning operation may be eliminated or reduced.

In some aspects, a method for cleaning an engine core of a gas turbine engine includes performing a cleaning operation on the engine core by delivering a cleaning fluid to the engine core via at least one of an access port or an inlet to a compressor section of the gas turbine engine. The method also includes supplying a gas to at least one of a bleed system or a sump system of the gas turbine engine with a source of pressurized gas operable to propel the gas during at least a portion of the cleaning operation. The bleed system is in fluid communication with a compressor section of the engine core and the gas supplied limits ingress of the cleaning fluid into at least one of the bleed system or the sump system.

In some aspects, a method for cleaning an engine core of a gas turbine engine is provided herein. The gas turbine engine comprises at least one of a bleed system in fluid communication with the engine core or a sump system in fluid communication with the engine core. The gas turbine engine defines an access port within the engine core. The method for cleaning the internal structure of the engine core includes performing a cleaning operation on the engine core by delivering a cleaning fluid to the engine core via least one of the access port or an inlet to a compressor section of the gas turbine engine. The method also includes supplying a gas to at least one of the bleed system or the sump system via a source of pressurized gas operable to propel the gas after the cleaning operation.

In some aspects, a system comprises an engine comprising and engine core and a bleed system in fluid communication with the engine core. The bleed system includes a reverse bleed apparatus. The reverse bleed apparatus comprises a cooling duct having an inlet and an outlet, the outlet in fluid communication with a compressor section of the engine core via a compressor bleed port, and a cooling blower operable to move a gas flow from the inlet of the cooling duct towards the outlet of the cooling duct and through the compressor bleed port. The system further includes a controller in operative communication with the cooling blower, wherein the controller is configured to supply a gas to the bleed system via the cooling blower during and/or after a cleaning operation performed on the engine.

A system comprises an engine comprising and engine core and a sump system in fluid communication with the engine core. The sump system comprises a sump housing defining a sump chamber and a sump vent, the sump vent disposed through a shaft of the gas turbine engine and in fluid communication with the sump chamber. The system further includes an external gas supply system with a gas moving device. The external gas supply system coupled to and in fluid communication with the sump vent. The system further includes a controller in operative communication with the gas moving device. The controller is configured to supply a gas to the sump system via the gas moving device during and/or after a cleaning operation performed on the engine.

In some aspects, a system comprises an engine comprising and engine core and a sump system in fluid communication with the engine core. The sump system comprises a sump housing defining a sump chamber and wherein the sump drain line is in fluid communication with the sump chamber, wherein sump drain line is configured to drain oil from the sump chamber. The system further comprises an external gas supply system with a gas moving device. The external gas supply system is coupled to and in fluid communication with the sump drain line. The system further comprises a controller in operative communication with the gas moving device. The controller is configured to supply a gas to the sump system via the gas moving device during and/or after a cleaning operation performed on the engine.

In some aspects, a system comprises an engine comprising and engine core and a sump system in fluid communication with the engine core. The sump system comprises a sump housing defining a sump chamber and a sump scavenge line in fluid communication with the sump chamber. The sump scavenge line is configured to collect and drain oil from the sump chamber. The system further comprises an external gas supply system with a gas moving device. The external gas supply system is coupled to and in fluid communication with the sump scavenge line. The system further includes a controller in operative communication with the gas moving device, wherein the controller is configured to supply a gas to the bleed system via the gas moving device during and/or after a cleaning operation performed on the engine.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

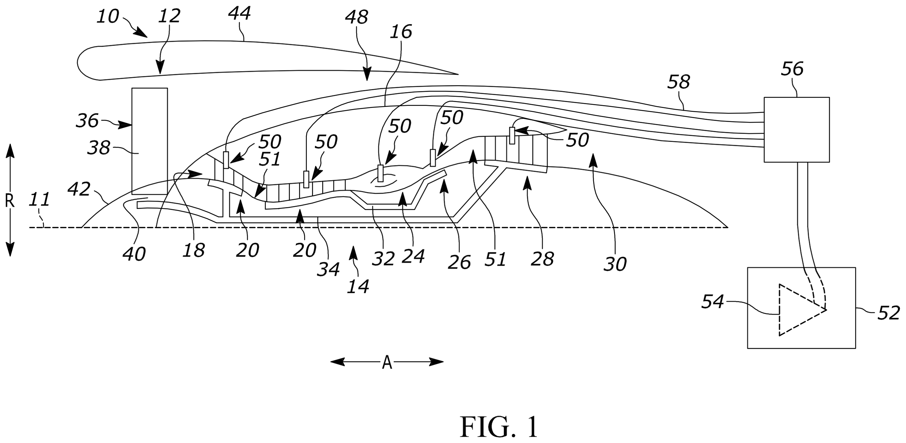

Turning to the figures, FIG. 1 illustrates an exemplary gas turbine engine 10. The exemplary gas turbine engine is depicted as a turbofan engine and is referred to herein as engine 10. The engine 10 defines an axial direction A (extending parallel to a longitudinal centerline 11 that is provided for reference) and a radial direction R. The engine 10 includes a fan section 12 and a turbine engine 14 disposed downstream from the fan section 12. The turbine engine 14 generally includes a substantially tubular outer casing 16 that defines an inlet 18 to a compressor section (e.g., low pressure (LP) compressor 20 and high pressure (HP) compressor 22). The outer casing 16 encases, in serial flow, a compressor section including a low pressure (LP) compressor 20 and a high pressure (HP) compressor 22, a combustor section 24, a turbine section including a high pressure (HP) turbine 26 and a low pressure (LP) turbine 28, and an exhaust nozzle section 30. A first, high pressure (HP) shaft 32 drivingly connects the HP turbine 26 to the HP compressor 22. A second, low pressure (LP) shaft 34 drivingly connects the LP turbine 28 to the LP compressor 20. The compressor section, the combustor section 24, and the turbine section together define an engine core 51 that extends from the annular inlet 18 through the LP compressor 20, the HP compressor 22, the combustor section 24, the HP turbine 26, the LP turbine 28, and the exhaust nozzle section 30.

The fan section 12 includes a fan 36 having a plurality of fan blades 38 coupled to a disk 40 in a spaced apart manner. The fan blades 38 extend outward from the disk 40 generally along the radial direction R. The disk 40 is covered by a rotatable front hub 42 that is aerodynamically contoured to promote a flow through the plurality of fan blades 38. Additionally, the fan section 12 includes an annular fan casing or outer nacelle 44 that circumferentially surrounds the fan 36 and/or at least a portion of the turbine engine 14. The nacelle 44 is supported relative to the turbine engine 14 by a plurality of circumferentially spaced guide vanes (not shown). A downstream section of the nacelle 44 extends over an outer portion of the turbine engine 14 so as to define a bypass passage 48 therebetween.

The fan blades 38, the disk 40, and the front hub 42 are rotatable together about the longitudinal centerline 11 directly by the LP shaft 34. However, in other embodiments the engine 10 may additionally include a reduction gearbox for driving the fan 36 at a reduced rotational speed relative to the LP shaft 34.

The engine 10 defines at least one access port 50. In some examples, the access port(s) 50 are borescope inspection port(s) that may allow for inspection of the engine 10 between operations and may open into the core air flow path of the engine 10. The access port(s) 50 are defined in the LP compressor 20, the HP compressor 22, a combustion chamber of the combustor section 24, the HP turbine 26, and the LP turbine 28. The access port(s) 50 may allow for inspection of the engine 10, for example, to allow for inspection or servicing of one or more blades, nozzles, combustion liners, and/or other components of the engine 10 between operations. During normal operations, the access port(s) 50 may be plugged such that the access port(s) 50 do not affect operation of the engine 10.

In FIG. 1, the engine 10 is depicted schematically as being cleaned by a wash system 52. The wash system 52 may be any suitable wash system for the cleaning of gas turbine engines or turbines generally. The wash system 52 can use water, chemicals, or combinations to clean the engine 10. In some embodiments, the wash system 52 is a foam washing system that generates a foam, for example, by aerating a flow of cleaning fluid. The wash system 52 includes a pump 54 that delivers a cleaning fluid through at least one wash line 58 and a distribution manifold 56 for splitting flow among the wash line(s) 58. As shown, the wash line(s) 58 are shown coupled to and in fluid communication with the access port(s) 50. As noted above, the engine 10 includes the outer nacelle 44 which defines the bypass passage 48. In the embodiment depicted, the wash line(s) 58 extend from an aft end of the engine 10 to the access port(s) 50.

It should be appreciated, however, that the engine 10 depicted in FIG. 1 is by way of example only, and that in other exemplary embodiments, aspects of the present disclosure may additionally, or alternatively, be applied to any other suitable gas turbine engine. For example, in other exemplary embodiments, the turbofan engine 10 may instead be any other suitable aeronautical gas turbine engine, such as a turbojet engine, turboshaft engine, turboprop engine, etc. Additionally, in still other exemplary embodiments, the exemplary engine 10 may include or be operably connected to any other suitable accessory systems. Additionally, or alternatively, the exemplary engine 10 may not include or be operably connected to one or more of the accessory systems discussed above.

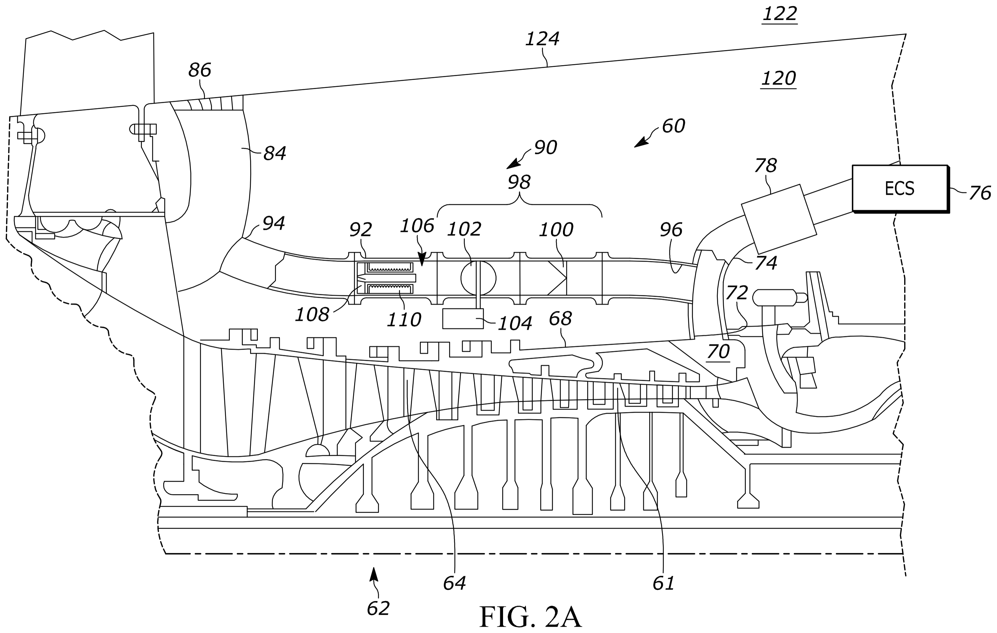

FIG. 2A illustrates a portion of an exemplary bleed system 60 in a gas turbine engine. The bleed system 60 is in fluid communication with a compressor section 62 of a gas turbine engine. In particular, the bleed system 60 is in fluid communication with the HP compressor 64. In some embodiments, the gas turbine engine is the engine 10. The compressor section 62 includes a number of stages of rotating blades and stationary vanes surrounded by a compressor casing 68. The compressor casing 68 includes a bleed plenum 70 that is in fluid communication with a flowpath 61 of the compressor section 62. The bleed plenum 70 is also in fluid communication with an exterior of the compressor casing 68 via at least one compressor bleed port 72. The bleed plenum 70 can extend over all or a portion of the circumference of a compressor casing 68. It will be understood that different engines may include one or more bleed ports, and a particular engine may or may not include a bleed plenum of the type illustrated.

One or more bleed ducts 74 are coupled to the compressor bleed port 72. The bleed duct(s) 74 are configured to conduct extracted airflow away from the compressor section 62 and, in particular, away from the HP compressor 64. The airflow extracted from the compressor section 62 via the bleed duct(s) 74 may be used for purposes such as use within an environmental control system ("ECS") 76. In addition, the airflow extracted from the compressor section 62 via the bleed duct(s) 74 may be used for pneumatically-powered actuators, engine hot section cooling, and/or clearance control systems. The bleed duct(s) 74 may include one or more bleed control valve(s) 78 operable to move between open and closed positions, thereby controlling flow through the compressor bleed port 72.

The bleed system 60 also includes a reverse bleed apparatus 90. The reverse bleed apparatus 90 can supply cooling air to the engine core through the compressor bleed port 72 when the engine is shut down. The reverse bleed apparatus 90 includes a cooling duct 92 disposed in the engine 10. It may be mounted, for example, wholly or partially in the undercowl space 120. The cooling duct 92 has an inlet 94 disposed in fluid communication with a source of cooling air and an outlet 96 disposed in fluid communication with the compressor bleed port 72. The complete cooling duct 92 may be built up from components such as tubes, connectors, pipe joints, and the like. In the embodiment of FIGS. 2A-2C, the inlet 94 is connected in fluid communication with an existing bypass duct 84 and a vent 86. In the embodiment of FIGS. 2A-2C, the outlet 96 is connected to existing bleed duct 74, which in turn is connected to the compressor bleed port 72.

The cooling duct 92 incorporates a valve assembly 98 including one or more valves operable to control airflow between the inlet 94 and the outlet 96. Two or more valves may be used to provide redundancy, and/or to monitor or control airflow through the cooling duct 92 based on engine operating conditions. In this example, first and second valves 100, 102 are used in series, and the first valve 100 is closest to the outlet 96. Stated another way, the first and second valves 100, 102 are in "series fluid communication", meaning that a fluid flow passes through one valve before encountering another valve.

In the illustrated example, the first valve 100 is a check valve which is passively biased towards an open position by a spring, stored fluid pressure, weight, or other suitable mechanism, and arranged to permit airflow in a direction from the inlet 94 towards the outlet 96 while blocking airflow in the opposite direction. It will be understood that all valves exhibit some fluid leakage even in the closed position. Accordingly, the operation of a valve in the closed position to block airflow, except for inherent leakage, may be described as "substantially preventing flow".

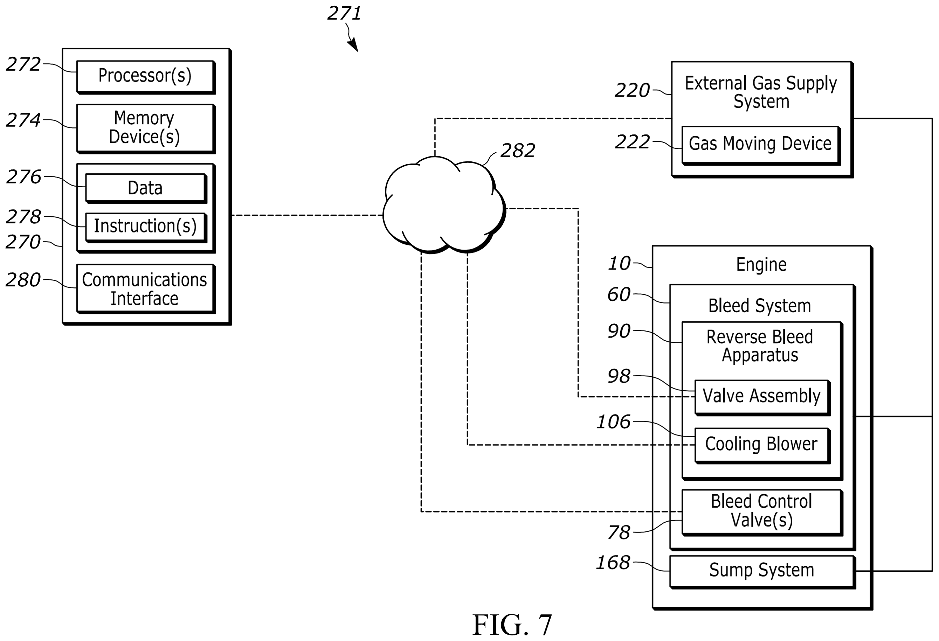

In the illustrated example, the second valve 102 is a controllable valve having a flow control element (e.g. gate or ball) movable between open and closed positions. In the open position, the second valve 102 permits airflow between the inlet 94 and the outlet 96. In the closed position, the second valve 102 blocks airflow between the inlet 94 and the outlet 96. The second valve 102 can be controllable and, as illustrated, is operatively coupled to an actuator 104. In some approaches, the second valve 102 is manually actuated. Examples of suitable actuators include pneumatic, hydraulic, and electrical devices. In some approaches, the actuator 104 controls the second valve 102. The actuator 104 can be controlled manually or automatically via a controller, such as the controller 270 shown and described with reference to FIG. 7. A controller may control operating parameters of the second valve 102 such as the valve position (open/closed/partially open), flow rate, etc.

In this specific example where one of the first and second valves 100, 102 is a check valve and the other of the first and second valves 100, 102 is a controllable valve, either valve may be placed in the upstream or downstream position relative to the other valve. The terms "upstream" and "downstream" refer to the relative direction with respect to fluid flow in a fluid pathway. For example, "upstream" refers to the direction from which the fluid flows, and "downstream" refers to the direction to which the fluid flows.

The cooling duct 92 includes a cooling blower 106 between the valve assembly 98 and the inlet 94. The cooling blower 106 may be any apparatus operable to blow, pump, or move a cooling airflow from the inlet 94 towards the outlet 96. In the illustrated example, the cooling blower 106 includes a rotor 108 carrying a plurality of fan blades. The cooling blower 106 may be located at, within or proximate to the inlet 94 and distal of the valves 100, 102.

A power source for operating the cooling blower 106 may be mechanical, hydraulic, pneumatic, or electrical. In the illustrated example, the rotor 108 of the cooling blower 106 is coupled to an electric motor 110. In one example, the motor 110 may be an AC induction motor or DC motor.

The cooling blower 106 may be sized to provide an adequate discharge pressure and flow rate for the cooling process described in more detail below. In some embodiments, the cooling blower 106 may be sized to produce air flow on the order of about 0.05 kg/s to about 0.25 kg/s, on the order of about 0.1 kg/s to about 0.25 kg/s, on the order of about 0.15 kg/s to about 0.25 kg/s, or, in some aspects, in the order of about 0.2 kg/s to about 0.25 kg/s. As one example, the cooling blower 106 may be sized to produce air flow on the order of approximately 0.05 kg/s (0.1 lb/s) to approximately 0.23 kg/s (0.5 Ib/s) at approximately 0.69 kPa (0.1 psi) to approximately 6.9 kPa (1.0 psi). In one exemplary end use, the cooling blower 106 may be sized to produce air flow on the order of approximately 0.12 kg/s (0.25 lb/s) at approximately 3.4 kPa (0.5 psi).

In operation, when the engine is running, the reverse bleed apparatus 90 is inactive. Portions of the cooling duct 92 will be pressurized with high-temperature air coming from the compressor bleed port 72. The valve assembly 98 will block a majority of the flow from the outlet 96 towards the inlet 94. After engine shutdown, the reverse bleed apparatus 90 can be used to move cooling air flow from the inlet 94 through the cooling duct 92, through the outlet 96 and into the compressor bleed port 72. Subsequently, the cooling air can pass over the fuel nozzles and other parts of the engine core 51 (FIG. 1) to lower their respective temperatures and to reduce or prevent coking. During shutdown, the reverse bleed apparatus 90 is employed by operating the cooling blower 106 and opening the valve (s) of the valve assembly 98.

In some embodiments, in accordance with the approaches described herein, during a cleaning operation, the reverse bleed apparatus 90 is also employed to supply air to the bleed system 60 to limit ingress of cleaning fluids into the bleed system 60. During the cleaning operation, the reverse bleed apparatus 90 is employed by operating the cooling blower 106 and opening the valve (s) of the valve assembly 98. The cooling blower 106 delivers air through the cooling duct 92 from the inlet 94 to the outlet 96. Air flows from the outlet 96 of the cooling duct 92 into the bleed duct(s) 74. The cooling blower 106 can also deliver air through the bleed port 72 into the bleed plenum 70 during the cleaning operation.

In some embodiments, in accordance with the approaches described herein, after a cleaning operation, the reverse bleed apparatus 90 is also employed to supply air to the bleed system 60 to dry residual cleaning fluid that remains in the bleed system 60 after the cleaning operation. After the cleaning operation, the reverse bleed apparatus 90 is employed by operating the cooling blower 106 and opening the valve(s) of the valve assembly 98. The cooling blower 106 delivers air through the cooling duct 92 from the inlet 94 to the outlet 96. Air flows from the outlet 96 of the cooling duct 92 into the bleed duct(s) 74. The cooling blower 106 can also deliver air through the bleed port 72 into the bleed plenum 70 after the cleaning operation. It is contemplated that the reverse bleed apparatus 90 can be used to supply any gas to the bleed system 60 and, in some aspects, the reverse bleed apparatus 90 is coupled to a gas source to supply the gas. In some approaches, the reverse bleed apparatus 90 is coupled to gas source that has a gas with a low moisture content, for example, a relative humidity of less than or equal to 50% relative humidity to dry the engine after a cleaning operation.

During cleaning operations for a gas turbine engine if the bleed system 60 is at the pressure of the ambient environment and the cooling blower 106 is off, cleaning fluid may get into various cavities and equipment that are in fluid communication with the engine core. Specifically, cleaning fluid can flow from the engine core 51 (FIG. 1) into the bleed plenum 70 and through the bleed port 72 into the bleed duct(s) 74 and through the bleed duct(s) 74 into the ECS 76. The ECS 76 can include ducts that feed air to the cabin A/C and, as a result, cleaning fluid trapped in the ECS 76 after a cleaning operation can cause undesirable odors in the cabin. Supplying air to the bleed system 60 during and/or after a cleaning operation can help mitigate cabin smell issues caused by residual cleaning fluid.

In addition, during cleaning operations, one or more of the valves 100, 102 in the valve assembly 98 and/or the bleed control valve(s) 78 can be exposed to cleaning fluid, contaminating such equipment and increasing corrosion risk. Thus, supplying air to the bleed system 60 can mitigate corrosion risk for equipment in the bleed system 60 and increase equipment reliability.

Further, during cleaning operations, cleaning fluid can inadvertently leak past the bleed control valve(s) 78 into the ECS 76. Using the approaches described herein to supply air to the bleed system 60, air from the cooling blower 106 provides a negative pressure drop to the bleed duct 74 which can prevent or reduce ingress of cleaning fluid into the ECS 76. In some embodiments, a pressure regulating and shutoff valve (PRSOV) and a high pressure shut off valve (HPSOV) for stage 10 of the compressor section 62 (FIG. 1) may be closed during a cleaning operation, such as a foam cleaning operation. During the cleaning operation, however, an intermediate pressure compressor vane (IPCV) may be open, permitting flow of foam towards the HPSOV. Operating the reverse bleed apparatus 90 with a negative pressure drop as described herein may provide gas flow from a final stage, such as stage 9 or stage 10, of the compressor section 62 (FIG. 1) towards the engine exit. As such the IPCV may have a negative pressure drop to protect the IPCV against opening during the cleaning operation.

In one embodiment, during a cleaning operation, the bleed control valve(s) 78 is closed while the reverse bleed apparatus 90 is employed to supply air through the cooling duct 92 and into portions of the bleed duct(s) 74. Closing the bleed control valve(s) 78 and providing an air supply through the cooling duct 92 helps to limit ingress of cleaning fluid into systems downstream of the bleed control valve(s) 78, such as the ECS 76.

In another embodiment, after a cleaning operation, the bleed control valve(s) 78 are open while the reverse bleed apparatus 90 is employed to supply air through the cooling duct 92 and through the bleed duct(s) 74. Opening the bleed control valve(s) 78 and providing an air supply through the bleed duct(s) 74 and through the cooling duct 92 dries residual cleaning fluid from the bleed system 60. Residual cleaning fluid may remain in portions of the bleed system 60 after the cleaning operation. Both limiting the ingress of cleaning fluid and drying residual cleaning fluid prevents or reduces cabin smell issues and improves the reliability of equipment in the bleed system 60, such as valves, that interact with the cleaning fluid. It is contemplated that other gases, other than air, can be supplied to the bleed system 60 via the reverse bleed apparatus 90. In some examples, the gas can be a gas with a low moisture content, for example, a relative humidity value of 50% relative humidity or less.

It is also contemplated that, when the bleed duct(s) 74 are used for other purposes such as for pneumatically-powered actuators, engine hot section cooling, and/or clearance control systems, opening one or more bleed control valve(s) 78 allows air from the cooling blower 106 to be supplied to such systems for pressurization during the cleaning operation. In this manner, equipment or components of pneumatically-powered actuators, engine hot section cooling, and/or clearance control systems are also protected from ingress of cleaning fluid.

One or more components of the aforementioned bleed system 60 are disposed within a core cowl 124 of the gas turbine engine. A fan of the gas turbine engine may be surrounded by a nacelle (not shown in FIGS. 2A-2C but see nacelle 44 and fan section 12 in FIG. 1) which is spaced-away from the core cowl 124 and defines an outboard boundary of a bypass flowpath 122. In this example the bypass flowpath 122 could also be referred to as a "fan duct". Alternatively, in the case of an open rotor engine, a fan nacelle 44 would not be present and the bypass flowpath 122 would be bounded only by an outer surface of the core cowl 124. The space inboard of the core cowl 124 is referred to as "undercowl space" 120. In practice, the undercowl space 120 may be vented to an ambient external environment (not shown). Components that are said to be internal to the engine, for purposes of this disclosure, means components that are located within the space surrounded by the fan nacelle 44, or the core cowl 124 (in a case such as an open rotor engine where the fan nacelle 44 is not present).

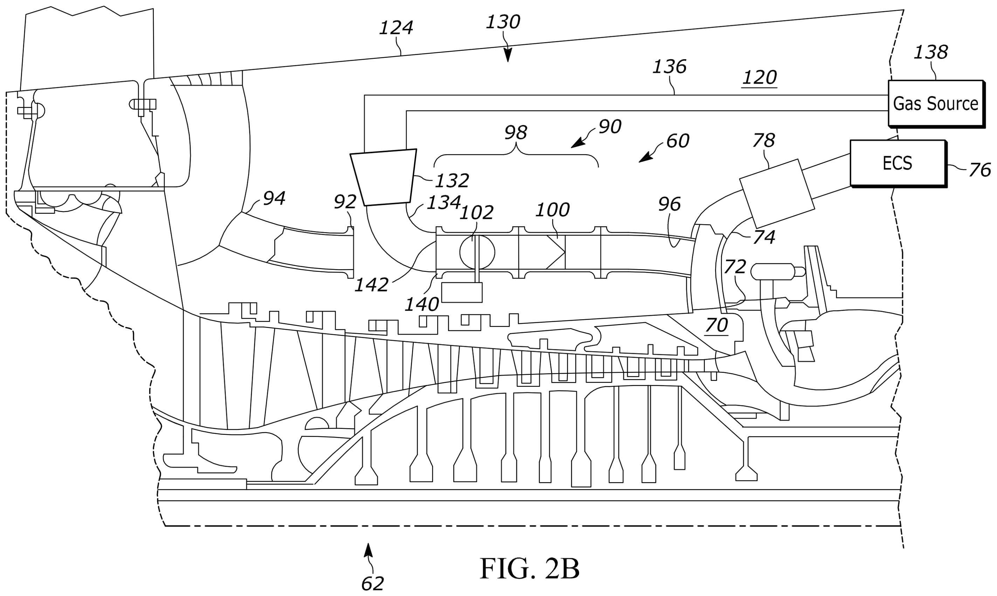

FIG. 2B illustrates the bleed system 60 coupled to an external gas supply system 130, according to some embodiments. The external gas supply system 130 can be used to supply gas to the bleed system 60 or portions thereof during and/or after a cleaning operation performed on a gas turbine engine, such as the engine 10.

The external gas supply system 130 is said to be external, for the purposes of this disclosure, in that it is not a permanent fixture of the engine but may be temporarily affixed to the engine, for example, during and/or after a cleaning operation. The external gas supply system 130 includes a gas moving device 132. The gas moving device 132 can be any suitable source of pressurized gas that is operable to propel gas through the bleed system 60. In some embodiments, the gas moving device 132 or source of pressurized gas includes at least one of a compressed gas tank, a compressor, a blower, or a microturbine.

An inlet of the gas moving device 132 is coupled to a gas supply line 136, which is coupled to a gas source 138. The gas source 138 may be any suitable source of gas. The gas may be air or an inert gas such as nitrogen, though the gas is not limited to such gases. In some examples, the gas source 138 is air from the ambient environment. In some examples, the gas source 138 is a tank of gas. In yet other examples, the gas source 138 is a plant gas system such as a plant air system, a plant nitrogen system, or a nitrogen generator. It is contemplated that, in some embodiments, the gas moving device 132 and gas source 138 are a tank of pressurized gas. In some embodiments, for example when the external gas supply system 130 is employed to dry an engine after a cleaning operation, the gas source 138 may include a gas with a low moisture content, for example, a relative humidity of less than or equal to 50% relative humidity.

An outlet of the gas moving device 132 is coupled to the engine via a connector 134. As shown, the connector 134 is a fitting that is mated with an existing connector 140 that is a part of the cooling duct 92 or a component coupled to the cooling duct 92. Specifically, in this embodiment, the cooling blower 106 (FIG. 2A) has been removed from the reverse bleed apparatus 90, and in particular from the cooling duct 92, to expose an access opening 142 for the reverse bleed apparatus 90 that serves as a connection point for the external gas supply system 130. As illustrated, the existing connector 140 is a flange. Though, any suitable type of existing connector in the cooling duct 92 can be used as a connection point. Similarly, any suitable connector 134 can be used based on the particular gas moving device 132 and the existing connector 140 within the cooling duct 92. Suitable connectors for the connector 134 include but are not limited to a v-band clamp, a flange, a rubber boot, a hose clamp, and tape. In some embodiments, there may not be an existing connector 140 and, instead, there may be an open pipe, tube, hose, line, etc. In such an embodiment, a fixture or adapter may be coupled to the open pipe, tube, hose, line, etc. to adapt the opening for an external hose connection. So configured, the connector 134 may include a hose.

While FIG. 2B shows the cooling blower 106 removed from the reverse bleed apparatus 90 to serve as a connection point for the external gas supply system 130, it is also contemplated that, in some embodiments, another component may be removed from the reverse bleed apparatus 90 to expose the access opening 142. For example, in some approaches, a connector such as a rubber joint of the cooling duct 92 may be removed to expose the access opening 142.

One or more components of the aforementioned external gas supply system 130 may be disposed within the core cowl 124 of the gas turbine engine. As illustrated, the gas moving device 132 and at least a portion of the gas supply line 136 are disposed within the core cowl 124. In some embodiments, the gas supply line 136 is disposed within the core cowl 124 and the gas moving device 132 is outside the core cowl 124. For example, the gas moving device 132 and/or the gas source 138 may be disposed on a wash cart, such as a foam wash cart, configured to deliver cleaning fluid to the engine.

In some embodiments, the external gas supply system 130 may further include a heating device such as an electric heater to heat the gas that is supplied to the bleed system 60. The heating device can be disposed in serial flow with the gas moving device 132 and can be positioned either upstream or downstream of the gas moving device 132.

Further, in some embodiments, the gas source 138 may act as the gas moving device 132. For example, the gas source 138 may be a tank storing a pressurized gas that serves both the source of the gas and to propel the gas through the bleed system 60.

In operation, during and/or after a cleaning operation for the engine, the external gas supply system 130 provides a gas through the gas supply line 136 to the bleed system 60. The external gas supply system 130 supplies the gas to the gas moving device 132. The gas moving device 132 propels the gas through the bleed system 60 through the connector 134. As illustrated, the gas moving device 132 supplies the gas through the valves 100, 102 of the valve assembly 98 and through the outlet 96 of the cooling duct 92. The gas flows from the cooling duct 92 into the bleed plenum 70 through the bleed port 72 and, in some aspects, through to the compressor section 62. In this manner, the external gas supply system 130 limits ingress of cleaning fluid into the bleed system 60 or portions thereof.

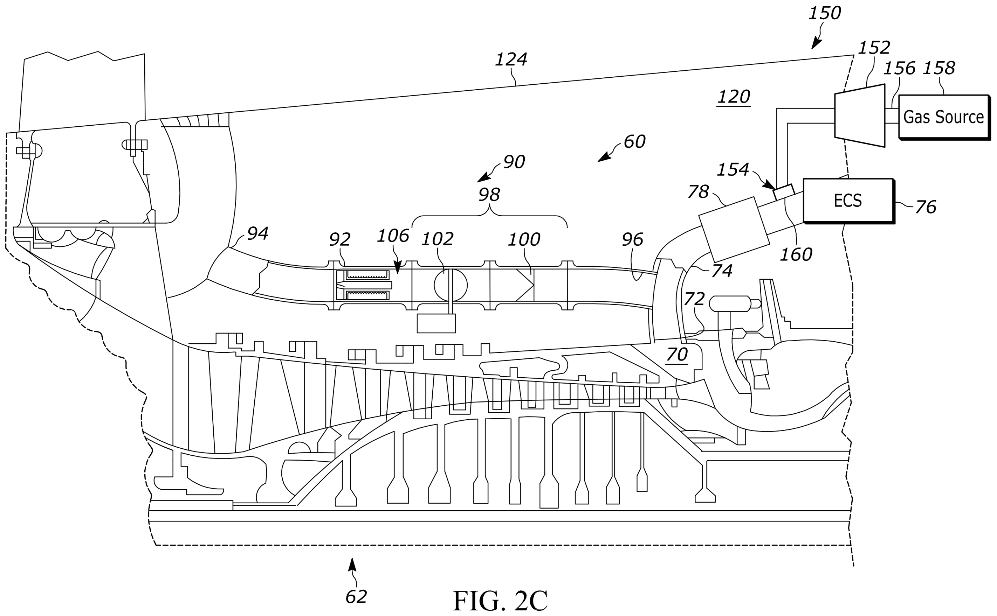

FIG. 2C illustrates the bleed system 60 coupled to an external gas supply system 150, according to some embodiments. The external gas supply system 150 can be used to supply gas to the bleed system 60 or portions thereof during and/or after a cleaning operation performed on a gas turbine engine, such as the engine 10.

The external gas supply system 150 includes a gas moving device 152. The gas moving device 152 can be any suitable source of pressurized gas that is operable to propel gas through the bleed system 60. In some embodiments, the gas moving device 152 includes comprises at least one of a compressed gas tank, a compressor, a blower, or a microturbine.

An inlet of the gas moving device 152 is coupled to gas supply line 156, which is coupled to a gas source 158. The gas source 158 may be any suitable source of gas. The gas may be air or an inert gas such as nitrogen, though the gas is not limited to such gases. In some examples, the gas source 158 is air from the ambient environment. In some examples, the gas source 158 is a tank of gas. In yet other examples, the gas source 158 is a plant gas system such as a plant air system, a nitrogen system, or a nitrogen generator. It is contemplated that, in some embodiments, the gas source 158 and the gas moving device 152 are a tank of pressurized gas.

An outlet of the gas moving device 152 is coupled to the engine via a connector 154. The bleed duct(s) 74 can define one or more access openings 160. The connector 154 can be coupled to the access opening 160. The external gas supply system 150 can tie into any suitable access opening 160 in the bleed duct(s) 74. Similarly, any suitable connector 154 can be used to couple the external gas supply system 150 to the bleed duct(s) 74 to deliver gas through the access opening 160.

One or more components of the aforementioned external gas supply system 150 may be disposed within the core cowl 124 of the gas turbine engine. As illustrated, the connector 154 and at least a portion of the gas supply line 156 is disposed within the core cowl 124. Another portion of the gas supply line 156 and the gas moving device 152 are disposed outside the core cowl 124. For example, the gas moving device 152 and/or the gas source 158 may be disposed on a wash cart, such as a foam wash cart, that includes equipment for delivering cleaning fluid to the engine.

In some embodiments, the external gas supply system 150 may further include a heating device such as an electric heater to heat the gas that is supplied to the bleed system 60. The heating device can be disposed in serial flow with the gas moving device 152 and can be positioned either upstream or downstream of the gas moving device 152. The heating device may be operated when the external gas supply system 150 is employed to supply gas to the bleed system 60 after a cleaning operation to dry residual cleaning fluid.

Further, in some embodiments, the gas source 158 may act as the gas moving device 152. For example, the gas source 158 may be a tank storing a pressurized gas that serves both the source of the gas and to propel the gas through the bleed system 60.

In operation, during and/or after a cleaning operation for the engine, the external gas supply system 150 provides a gas to the bleed system 60. The external gas supply system 150 supplies the gas to the gas moving device 152 through the gas supply line 156. The gas moving device 152 supplies the gas to the bleed system 60 through the connector 154. As illustrated, the gas moving device 152 supplies the gas through the valves 100, 102 of the valve assembly 98 and through the outlet 96 of the cooling duct 92. The gas flows from the cooling duct 92 into the bleed duct(s) 74. The gas also flows from the cooling duct 92 into the bleed plenum 70 through the bleed port 72 and, in some aspects, through to the compressor section 62. In this manner, the external gas supply system 150 supplies a flow of gas through the bleed system 60 to limit ingress of cleaning fluid into the bleed system 60 or portions thereof.

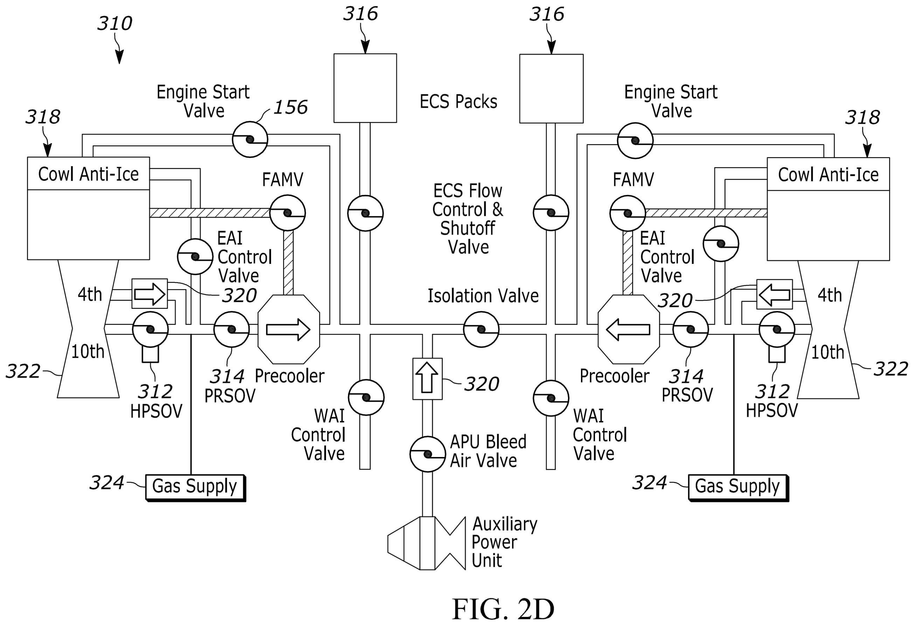

FIG. 2D illustrates another portion of the bleed system 60 that is shown and described with reference to FIG. 2A. In particular, FIG. 2D illustrates an engine bleed distribution system 310 associated with the bleed system 60. The engine bleed distribution system 310 supplies bleed air from a compressor 322 of a gas turbine engine through a pneumatic manifold.

The engine bleed distribution system 310 includes a high-pressure shutoff valve (HPSOV) 312 that controls the flow of bleed air from a final stage, such as the 10^{th} stage, of the high pressure compressor 322. The HPSOV 312 may be a pneumatically-actuated, electrically controlled, variable pressure regulating and shut off valve. The engine bleed distribution system 310 also includes an intermediate pressure check valve (IPCV) 320 that controls the flow of bleed air from an initial stage, such as the 4^{th} stage, of the compressor 322. In some configurations, one or more components of the engine bleed distribution system 310 are coupled to the bleed duct 74 (FIG. 2A) and are positioned downstream of the bleed control valve 78 (FIG. 2A). In operation, the engine bleed distribution system 310 supplies the bleed air to an environmental control system 316 and to a de-icing system 318.

In the engine bleed distribution system 310, bleed air comes from a final stage (e.g., the 10^{th} stage) and an initial stage (e.g., the 4^{th} stage) of the compressor 322. At low engine speed, the engine bleed distribution system 310 uses bleed air from a final stage of the compressor 322. At high engine speed, the engine bleed distribution system 310 uses bleed air from an initial stage of the compressor 322.

At low engine speed, the HPSOV 312 controls the pressure of the engine bleed air. The IPCV 320 prevents or limits reverse flow of bleed air. At high engine speed, the HPSOV 312 closes and the IPCV 320 opens to supply bleed air to a pressure regulating shut off valve (PRSOV) 314, and the PRSOV 314 controls the pressure of the engine bleed air.

It is contemplated that the systems and methods described herein can be used to protect the HPSOV 312, the IPCV 320, and/or the PRSOV 314 from the ingress of cleaning fluid. In some embodiments, a pressurized gas can be supplied to the engine bleed distribution system 310 during and/or after a cleaning operation via one or more of the embodiments shown and described with reference to FIGS. 2A-2C. In some embodiments, a gas supply 324 can be tied into the engine bleed distribution system 310 between the HPSOV 312 and the PRSOV 314. Any suitable pressurized gas supply can be used. In some aspects, the gas supply 324 is the cooling blower 106 of the reverse bleed apparatus 90 illustrated in FIG. 2A, the external gas supply system 130 illustrated in FIG. 2B, or the external gas supply system 150 illustrated in FIG. 2C.

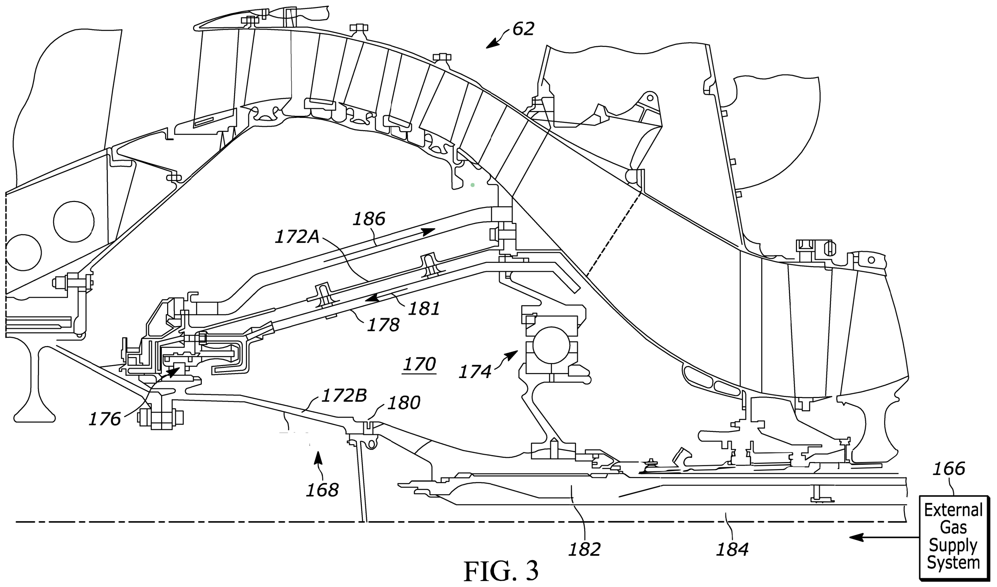

FIG. 3 illustrates a sump system 168 of a gas turbine engine coupled to an external gas supply system 166, according to some embodiments. The external gas supply system 166 can be used to supply gas to the sump system 168 or to portions thereof during and/or after a cleaning operation performed on the gas turbine engine, such as the engine 10.

The sump system 168 includes a sump chamber 170. The sump chamber 170 is in fluid communication with the engine core, such as the engine core 51 (FIG. 1). As illustrated, the sump chamber 170 is in fluid communication with the compressor section 62 of the engine core. The sump chamber 170 is an oil wetted region that can be used to cool bearings 174, 176. Bearings in a gas turbine engine, such as the bearings 174, 176, rotatably mount rotors with respect to stators in the compressor and high and low pressure turbines of the engine. The sump chamber 170 is enclosed by a sump housing 172. As illustrated, the sump housing 172 includes a portion of a fan shaft 172A and an outer annular structure 172B. The sump housing 172 encloses the bearings 174, 176.

As illustrated, the sump system 168 includes an oil supply conduit 178 through which flows an oil supply 181 into the sump chamber 170. Oil is supplied to the bearings 174, 176 in the sump chamber 170. Oil is supplied to the sump chamber 170 to prevent overheating of the bearings 174, 176. The sump system 168 also includes an oil scavenge system 186. The scavenge system 186 is configured to collect and/or drain oil from the sump chamber 170 for further processing before being pumped back into the bearing lubrication system.

The sump housing 172 defines a vent opening 180 that is in fluid communication with a sump vent 184, which may be referred to as a center vent tube. The sump chamber 170 is vented through the forward fan shaft and out of the engine through the sump vent 184. The sump vent 184 is disposed through a shaft 182 of the gas turbine engine. As illustrated, the shaft 182 is a low pressure (LP) turbine shaft. In some configurations, an outlet (not shown) of the sump vent 184 delivers the vented fluids to the exhaust of the gas turbine engine. The external gas supply system 166 is coupled to the sump vent 184.

In some embodiments, during a cleaning operation for the gas turbine engine, the external gas supply system 166 supplies gas to the sump system 168 during a cleaning operation to limit ingress cleaning fluid into the sump system 168. In some embodiments, after a cleaning operation for the gas turbine engine, the external gas supply system 166 supplies gas to the sump system 168 to dry residual cleaning fluid that remains in the sump system 168 after a cleaning operation. Exposure to cleaning fluid can be detrimental to equipment in the sump system 168 and accordingly limiting the ingress of cleaning fluid and/or removing residual cleaning fluid from the sump system 168 can protect equipment and improve equipment reliability.

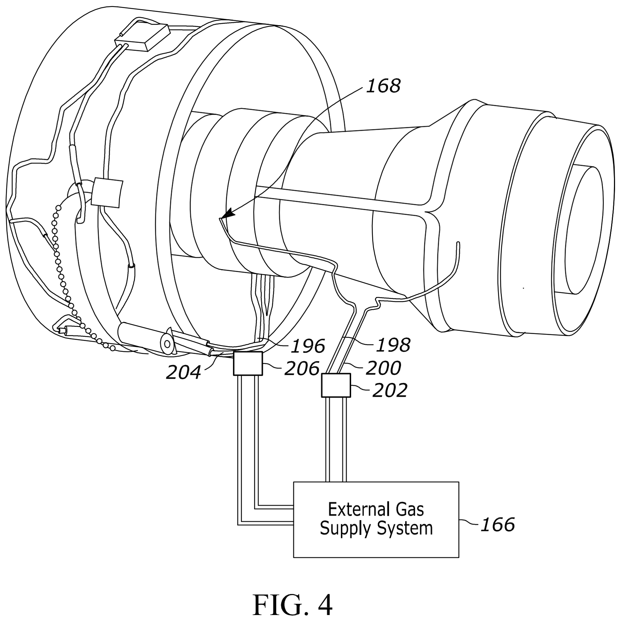

FIG. 4 illustrates additional ways for coupling the external gas supply system 166 to a sump system, such as the sump system 168 of FIG. 3, in a gas turbine engine. In FIG. 4, the external gas supply system 166 is coupled to at least one of a drain line 198 or a scavenge line 196 of the sump system 168.

To supply gas through the drain line 198, a connector 202 is used to couple the external gas supply system 166 to the drain line 198. The drain line 198 defines one or more access openings 200. The access opening 200 can be any suitable access opening, port, or coupling in in the drain line 198. In some embodiments, the access openings 200 can include one or more of a sump magnetic chip detector port (e.g., with a plug removed) or a tube connecting to a lubrication unit. As illustrated, the access opening 200 is an open end of the drain line 198. The connector 202 is coupled to the access opening 200. Any suitable connector 202 can be used to couple the external gas supply system 166 to the drain line 198 in order to deliver gas through the access opening 200 into the drain line 198. Examples of suitable connectors 202 include but are not limited to a threaded pipe connector or a flanged pipe connection.

The drain line 198 is in fluid communication with the sump chamber 170 and, accordingly, supplying gas through the drain line 198 also supplies gas to the sump system 168. In some embodiments, the external gas supply system 166 supplies gas to the sump system 168 via the drain line 198 during a cleaning operation performed on the gas turbine engine. Gas from the external gas supply system 166 provides gas to the sump chamber 170 to limit ingress of cleaning fluid into the sump chamber 170 and associated equipment during a cleaning operation. In some embodiments, the external gas supply system 166 supplies gas to the sump system 168 via the drain line 198 after a cleaning operation performed on the gas turbine engine. After the cleaning operation, gas from the external gas supply system 166 can be used to dry sump system 168 to eliminate residual cleaning fluid.

To supply gas through the scavenge line 196, a connector 206 is used to couple the external gas supply system 166 to the scavenge line 196. The scavenge line 196 defines one or more access openings 204. The access opening 204 can be any suitable access opening, port, or coupling in the scavenge line 196. In some embodiments, the access opening 204 can include one or more of a sump magnetic chip detector port (e.g., with a plug removed) or a tube connecting to a lubrication unit. The connector 206 is coupled to the access opening 204. Any suitable connector 206 can be used to couple the external gas supply system 166 to the scavenge line 196 in order to deliver gas through the access opening 204 into the scavenge line 196. Examples of suitable connectors 206 include but are not limited to a threaded pipe connector or a flanged pipe connection.

The scavenge line 196 is in fluid communication with the sump chamber 170 and, accordingly, supplying gas through the scavenge line 196 also supplies gas to the sump system 168. In some embodiments, the external gas supply system 166 supplies gas to the sump system 168 via the scavenge line 196 during a cleaning operation performed on the gas turbine engine. In some embodiments, the external gas supply system 166 supplies gas to the sump system 168 via the scavenge line 196 after a cleaning operation performed on the gas turbine engine.

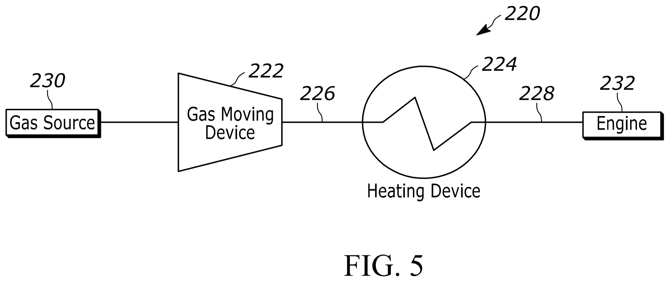

FIG. 5 illustrates an exemplary external gas supply system 220 that can be implemented as any of the external gas supply systems described herein. For example, the external gas supply system 220 can be employed as the external gas supply system 130 in FIG. 2B, as the external gas supply system 150 in FIG. 2C, or as the external gas supply system 166 in FIG. 3.

The external gas supply system 220 includes a gas moving device 222, which can be any suitable source of pressurized gas, and a heating device 224 in a serial flow arrangement. Though, as illustrated, the heating device 224 is positioned downstream of the gas moving device 222, it is contemplated that the heating device 224 can also be positioned upstream of the gas moving device 222. The gas moving device 222 can be any suitable gas moving device including but not limited to a compressor, a blower, or a fan. The gas moving device 222 receives gas from a gas source 230. In some embodiments, the gas source 230 includes at least one of atmospheric gas, a fan, or a turbine (e.g., a microturbine). The gas moving device 222 propels the gas through the heating device 224 and through an outlet line 228 to an engine 232 or portions thereof. The heating device 224 can be any suitable heating device including but not limited to an electric heater or a heat exchanger. The outlet line 228 can be disposed in fluid communication with any engine system, such as a bleed system or a sump system, for the purposes of supplying gas during a cleaning operation and/or drying the engine after such a cleaning operation.

In operation, the gas moving device 222 receives a gas from the gas source 230. The gas moving device 222 propels the gas and delivers a gas stream that exits the gas moving device 222 through an outlet line 226. The gas stream enters the heating device 224. The heating device 224 heats the gas stream to generate a heated gas stream for the engine 232. The heated gas stream exits the heating device 224 via an outlet line 228. The outlet line 228 delivers the heated gas stream to the engine 232.

In some embodiments, one or more of the gas moving device 222 and the heating device 224 are disposed on a wash cart that is used for washing the engine 232. The wash cart may also include one or more components of a cleaning system such as a cleaning fluid storage tank, a gas source which may be used as the gas source 230, a foam generator, and/or a pump. In this manner, the wash cart can be used to wash the engine 232 in a cleaning operation, supply gas to the engine 232 during the cleaning operation, and/or purge residual cleaning fluid from the gas turbine engine 232 after a cleaning operation.

Though the heating device 224 is illustrated downstream of the gas moving device 222 it is also contemplated that the flow order of the gas moving device 222 and the heating device 224 can be reversed such the gas from the gas source 230 is heated before flowing into the gas moving device 222.

Also, it is to be understood that, in some embodiments, the heating device 224 may not be present. For example, the external gas supply system 220 may be operable to propel the gas stream through the outlet line 228 and engine 232 without heating the gas stream.

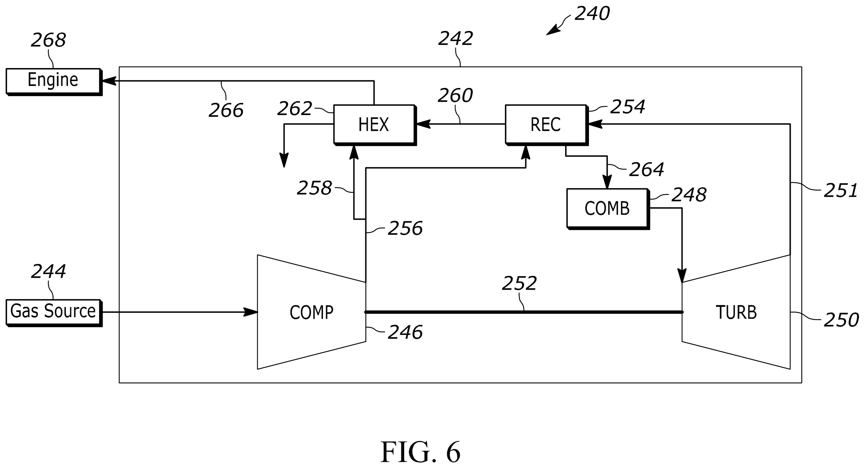

FIG. 6 illustrates another embodiment an external gas supply system 240 that can be implemented as any of the external gas supply systems described herein. For example, the external gas supply system 240 can be employed as the external gas supply system 130 in FIG. 2B, as the external gas supply system 150 in FIG. 2C, as the external gas supply system 166 in FIG. 3, or as the external gas supply system 220 in FIG. 5.

The external gas supply system 240 includes a microturbine 242 to propel and heat gas from the gas source 244. The microturbine 242 generally includes a compressor 246, a combustor 248 disposed downstream of the compressor 246, and a turbine 250 disposed downstream of the combustor 248. The compressor 246 is mechanically coupled to the turbine 250 by a drive shaft 252.

In general, the compressor 246 takes in gas from the gas source 244 and compresses it. The compressed gas is fed to the combustor 248 where it is mixed with fuel and ignited. In some examples, the fuel is hydrogen. High pressure exhaust gases exit the combustor 248 and are directed to the turbine 250, passing through the turbine blades and causing rotation of the drive shaft 252. The rotational energy produced by the spinning drive shaft 252 can be used to generate electricity. In some embodiments, the drive shaft 252 is operatively coupled to a power system for a wash cart that includes one or more components of a cleaning system for an engine.

The microturbine 242 also includes a recuperator 254 that recovers waste heat from the turbine exhaust and uses such heat from the turbine exhaust to preheat compressed gas from the compressor 246 before it enters the combustor 248.

The compressor 246 compresses gas from the gas source 244. An inlet of the compressor 246 receives gas from the gas source 244. An outlet of the compressor 246 comprises a first compressor outlet line 256 that forms a passageway for a first compressor outlet stream and a second compressor outlet line 258 that forms a passageway for a second compressor outlet stream. The first compressor outlet stream comprises compressed air. The first compressor outlet line 256 delivers the first compressor outlet stream to the recuperator 254. The first compressor outlet stream flows through the recuperator 254 to the combustor 248. The second compressor outlet line 258 delivers a second compressor outlet stream to a heat exchanger 262.

The recuperator 254 includes a first portion that receives the first compressor outlet stream from the first compressor outlet line 256, heats the first compressor outlet stream using a turbine exhaust stream and generates a first recuperator outlet stream. A first recuperator outlet line 264 delivers the first recuperator outlet stream to the combustor 248. The recuperator 254 also includes a second portion that receives the turbine exhaust stream from the turbine exhaust line 251. The recuperator 254 is configured so that the turbine exhaust stream heats the first compressor exhaust stream to generate a second recuperator outlet stream. A second recuperator outlet line 260 delivers the second recuperator outlet stream to the heat exchanger 262.

The heat exchanger 262 includes a first portion that receives the second compressor outlet stream from the second compressor outlet line 258 and heats the second compressor outlet stream to generate a gas stream that is delivered to the engine via a gas supply line 266. The heat exchanger 262 uses the recuperator outlet stream to heat the second compressor outlet stream. The heat exchanger 262 also includes a second portion that receives the recuperator outlet stream from the first recuperator outlet line 260. The heat exchanger 262 is configured so that the recuperator outlet stream heats the second compressor outlet stream, thereby generated heated, compressed air for the gas stream.

In some embodiments, the microturbine 242 is disposed on a wash cart that is used for washing an engine 268 or portions thereof. The wash cart may also include one or more components of a cleaning system for the engine. In this manner, the wash cart can be used to both wash the engine 268 and purge residual cleaning fluid from the engine 268 following a cleaning operation.

Using the microturbine 242 as the pressurized gas supply system supplies both high pressure and high temperature gas with a single, integrated device. Further, as described above, when the microturbine 242 is incorporated into a wash cart, the microturbine 242 can also be used to generate power needed to operate the wash cart by integrating a generator into the microturbine 242.

Numerous different arrangements are possible for control and operation of the systems that can be used to supply the gas to the bleed system 60 or the sump system 168. FIG. 7 provides an exemplary system 271 that can be used to control the supply of the gas to the engine 10 during and/or after a cleaning operation. The engine 10 includes the bleed system 60 and the sump system 168. These systems are described above in further detail. The bleed system 60 includes various controllable devices such the one or more of the valves of the valve assembly 98, the cooling blower 106, and the bleed control valve(s) 78. In addition, it is contemplated that the external gas supply systems described herein, such as the external gas supply system 220, can include one or more controllable devices such as valves, flow meters (e.g., gas flow meters), pressure regulators, sensors, and the gas moving device 222, which may incorporate compressors, regulators blowers, etc. The system shown in FIG. 7 can be used to control or operate such devices.

The system 271 includes one or more controllers 270 that are operably connected to one or more components of the reverse bleed apparatus 90 such as the valve assembly 98, the cooling blower 106, and the bleed control valve(s) 78 in the reverse bleed apparatus 90. So configured, the controller(s) 270 can control one or more operating parameters of the valve assembly 98, the cooling blower 106, and/or the bleed valve(s) 78. The controller(s) 270 may also be operably connected to one or more components in the external gas supply system 220 such as the gas moving device 222. So configured, the controller(s) 270 can control one or more operating parameters of the gas moving device 222 such as a flow rate, a pressure, etc. The controller(s) 270 can also be operably coupled to and control one or more operating parameters of the heating device 224 (not shown in FIG. 7).

In some embodiments, the controller(s) 270 include one or more controllers associated with a wash system for an engine, such as a wash system that is incorporated into wash cart (e.g., a foam wash cart). As such, the controller(s) 270 may also be configured to control one or more operating parameters of a wash system for an engine, such as operating parameters for pumps for cleaning fluid or other components of the wash system. In some examples, the controller(s) 270 may be configured to control one or more operating parameters of the wash system 52 that is described with reference to FIG. 1.

The controller(s) 270 may include one or more processor(s) 272 and one or more memory device(s) 274. The one or more processor(s) 272 may include any suitable processing device, such as a microprocessor, microcontroller, integrated circuit, logic device, or other suitable processing device. The one or more memory device(s) 274 may include one or more computer-readable media, including, but not limited to, non-transitory computer-readable media, random access memory (RAM), read only memory (ROM), hard drives, flash drives, or other memory devices.

The one or more memory device(s) 274 may store information accessible by the one or more processor(s) 272, including computer-readable instructions 278 that can be executed by the one or more processor(s) 272. The instructions 278 can be any set of instructions that when executed by the one or more processor(s) 272, cause the one or more processor(s) 272 to perform operations. The instructions 278 may be software written in any suitable programming language or can be implemented in hardware. In some embodiments, the instructions 278 may be executed by the one or more processor(s) 272 to cause the one or more processor(s) to perform operations, such as the washing operations of a gas turbine engine, as described herein, and/or any other operations or functions of the controller. Additionally, and/or alternatively,
the instructions 278 may be executed in logically and/or virtually separate threads on the processor(s) 272. The memory device(s) 274 can further store data 276 that can be accessed by the processor(s) 272.

The controller(s) 270 can also include a communications interface 280 used to communicate, for example, with the components of the reverse bleed apparatus 90 and/or the external gas supply system 220. The communications interface 280 may include any suitable components for interfacing with one more communications network(s), including for example, transmitters, receivers, ports, controllers, antennas, or other suitable components. The controller(s) 270 may also be communication (e.g., via the communications interface 280) with the various components of the reverse bleed apparatus 90 and/or the external gas supply system 220 described above and may selectively operate the reverse bleed apparatus 90 and/or the external gas supply system 220 in response to user input and feedback from these components. More specifically, for the embodiment depicted, the controller(s) 270 can be configured to communicate through a wireless communication network 282 through communications interface 280, such that the controller(s) 270 may send or receive information and/or commands to or from the various components of the exemplary wash system 52 wirelessly. It should be appreciated, however, that in other embodiments,
the controller(s) 270 may additionally, or alternatively, use a wired communication bus to communicate with various components of the reverse bleed apparatus 90 and/or the external gas supply system 220.

In some embodiments, in operation, the controller(s) 270 are in operative communication with the cooling blower of the reverse bleed apparatus 90. The controller(s) 270 may be configured to supply a gas to the bleed system via the cooling blower during and/or after a cleaning operation performed on the engine 10.

In some embodiments, the controller(s) 270 are in operative communication with the gas moving device 222. The controller(s) 270 may configured to supply a gas to the sump system via the gas moving device during and/or after a cleaning operation performed on the engine.

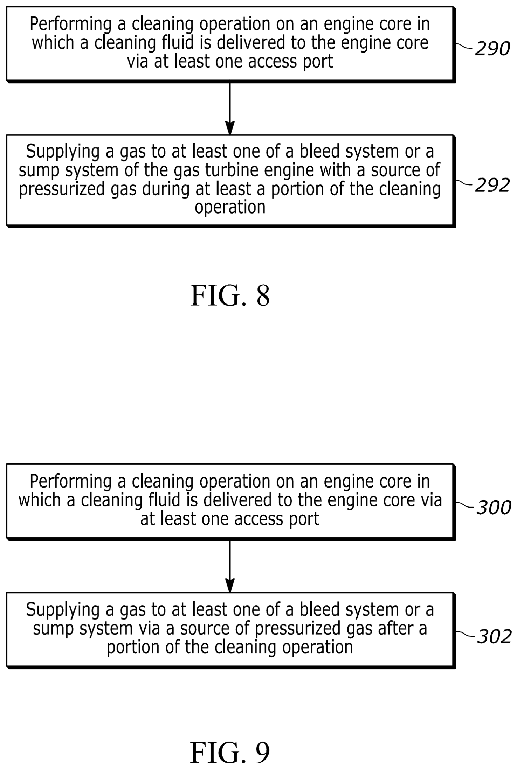

FIG. 8 illustrates an exemplary method for cleaning an internal structure of a gas turbine engine. In some embodiments, the gas turbine engine is the engine 10 shown and described with reference to FIG. 1. The internal structure may be, for example, a structure within the engine core 51 such as components of one or more of the compressor section 62, the combustor section 24, and the turbine section of the engine 10.

At 290, the method includes performing a cleaning operation on the engine core, such as the engine core 51 of the engine 10, by delivering a cleaning fluid to the engine core via at least one of an access port or an inlet to a compressor section of the gas turbine engine. In some embodiments, the at least one access port is one or more of the access port(s) 50 in the engine 10 and the inlet to the compressor section is the inlet 18 in the engine 10.

At 292, the method includes supplying a gas to at least one of a bleed system or a sump system of the gas turbine engine with a source of pressurized gas (e.g., a gas moving device) during at least a portion of the cleaning operation. The source of pressurized gas can comprise at least one of a compressor, a blower, or a microturbine. In some embodiments, the bleed system is the bleed system 60 shown and described with reference to FIGS. 2A, 2B, 2C. In some embodiments, the sump system is the sump system 168 described with reference to FIGS. 3 and 4. The bleed system is in fluid communication with a compressor section of the engine core. The gas supplied to at least one of the bleed system or the sump system limits ingress of cleaning fluid into at least one of the bleed system or the sump system.

In some configurations, the bleed system includes a reverse bleed apparatus comprising a cooling duct having an inlet and an outlet. The outlet of the cooling duct is in fluid communication with the compressor section of the engine core via a compressor bleed port. The bleed system further includes a cooling blower operable to move a gas flow from the inlet of the cooling duct towards the outlet of the cooling duct and through the compressor bleed port. In some examples, the bleed system can be the bleed system 60 such that the cooling duct is the cooling duct 92 with inlet 94 and outlet 96 and the cooling blower is the cooling blower 106 of FIGS. 2A and 2C. In some embodiments, the source of pressurized gas is the cooling blower of the reverse bleed apparatus. In other embodiments, an external gas supply system is coupled to the cooling blower of the reverse bleed apparatus to supply the gas into the bleed system during at least a portion of the cleaning operation.

In some configurations, the reverse bleed apparatus further comprises at least one valve disposed in the cooling duct. When the reverse bleed apparatus is so configured, the method may further comprise opening the at least one valve in the reverse bleed apparatus while supplying the gas. In some examples, the at least one valve in the reverse bleed apparatus can be the valves 100, 102 in the valve assembly 98 of the reverse bleed apparatus 90.

In embodiments, when the bleed system includes a reverse bleed apparatus, the method further includes removing at least one of the cooling blower or a connector of the cooling duct (e.g., a rubber joint) from the reverse bleed apparatus to expose an access opening for the reverse bleed apparatus and coupling an external gas supply system to the access opening. In this manner, the gas is supplied to the bleed system through the cooling duct by the external gas supply system. The external gas supply system may be configured to deliver gas to the bleed system as is shown in FIGS. 2B and 2C. Further, the external gas supply system can be any of the external gas supply systems described here such as the external gas supply system 130 in FIG. 2B, as the external gas supply system 150 in FIG. 2C, the external gas supply system 166 in FIGS. 3 and 4, the external gas supply system 220 in FIG. 5, or the external gas supply system 240 in FIG. 6.

In some configurations, the bleed system comprises at least one bleed duct in fluid communication with the outlet of the cooling duct such that the cooling blower supplies gas into the at least one bleed duct during at least a portion of the cleaning operation. The bleed duct can be one or more of the bleed duct(s) 74 of FIGS. 2A, 2B, 2C.

In some configurations, the bleed system comprises at least one bleed duct that is in fluid communication with the compressor section of the engine core. The at least one bleed duct may supply air from the compressor section of the engine core to at least one of an environmental control system (ECS), a pneumatically powered actuator, engine hot section cooling, or a clearance control system. The bleed duct can be one or more of the bleed duct(s) 74 of FIGS. 2A, 2B, 2C. In some embodiments, the gas is supplied to the bleed system via an external gas supply system coupled to the at least one bleed duct. Further, the external gas supply systems can be any of the external gas supply system described here such as the external gas supply system 130 in FIG. 2B, as the external gas supply system 150 in FIG. 2C, as the external gas supply system 166 in FIGS. 3 and 4, the external gas supply system 220 in FIG. 5, or the external gas supply system 240 in FIG. 6.

The sump system may be associated with a bearing of the gas turbine engine and is configured to supply and scavenge lubricating oil for the bearing. In some examples, the sump system is the sump system 168 described with reference to FIGS. 3 and 4.

In some configurations, the sump system comprises a sump housing defining a sump chamber and a sump vent disposed through a shaft of the gas turbine engine, the sump vent in fluid communication with the sump chamber. So configured, the gas can be supplied to the sump system through the sump vent. In some embodiments an external gas supply is coupled with the sump vent to supply the gas into the sump system during at least a portion of the cleaning operation. The external gas supply systems can be any of the external gas supply system described herein such as the external gas supply system 130 in FIG. 2B, as the external gas supply system 150 in FIG. 2C, as the external gas supply system 166 in FIGS. 3 and 4, the external gas supply system 220 in FIG. 5, or the external gas supply system 240 in FIG. 6.

In some configurations, the sump system comprises a sump housing defining a sump chamber and a sump drain line in fluid communication with the sump chamber. The sump drain line is configured to drain oil from the sump chamber. So configured, the gas can be supplied to the sump system through the sump drain line. In some embodiments, an external gas supply system is coupled to the sump drain line to supply the gas into the sump system during at least a portion of the cleaning operation. The external gas supply system can be any of the external gas supply systems described herein such as the external gas supply system 130 in FIG. 2B, as the external gas supply system 150 in FIG. 2C, as the external gas supply system 166 in FIGS. 3 and 4, the external gas supply system 220 in FIG. 5, or the external gas supply system 240 in FIG. 6.

In some configurations, the sump system comprises a sump housing defining a sump chamber and a sump scavenge line in fluid communication with the sump chamber. The sump scavenge line is configured to collect and drain oil from the sump chamber. So configured, the gas can be supplied to the sump system through the sump scavenge line. In some embodiments, external gas supply system is coupled to the sump scavenge line to supply the gas into the sump system during at least a portion of the cleaning operation. The external gas supply system can be any of the external gas supply systems described herein such as the external gas supply system 130 in FIG. 2B, as the external gas supply system 150 in FIG. 2C, as the external gas supply system 166 in FIGS. 3 and 4, the external gas supply system 220 in FIG. 5, or the external gas supply system 240 in FIG. 6.

In some embodiments, the external gas supply system includes a connector for coupling the external gas supply system to the at least one bleed duct. The connector can comprise at least one of a v-band clamp, a flange, a rubber boot, a hose clamp, or tape.

It is contemplated that, in some approaches, the method can further include supplying the gas to at least one of the bleed system or the sump system after a cleaning operation. Additionally, in some approaches, the gas can be supplied to at least one of the bleed system or the sump system at an elevated temperature to promote drying of such systems after the cleaning operation. In some aspects, the elevated temperature is in the range of about 55 degrees Celsius to about 80 degrees Celsius.

FIG. 9 illustrates another exemplary method for cleaning an internal structure of a gas turbine engine. In some embodiments, the gas turbine engine is the engine 10 shown and described with reference to FIG. 1. The internal structure may be, for example, a structure within the engine core 51 such as components of one or more of the compressor section 62, the combustor section 24, and the turbine section of the engine 10.

At step 300, the method includes performing a cleaning operation on an engine core by delivering a cleaning fluid into an engine core, such as the engine core 51, of the gas turbine engine via at least one of an access port or an inlet to a compressor section of the gas turbine engine. In some embodiments, the at least one access port is one or more of the access port(s) 50 in the engine 10 and the inlet is the inlet 18 in the engine 10.

At step 302, the method includes supplying a gas to at least one of a bleed system or a sump system via a source of pressurized gas (e.g., a gas moving device) after a portion of the cleaning operation to reduce or eliminate remaining cleaning fluid in the engine core. The source of pressurized gas can comprise at least one of a compressor, a blower, or a microturbine. In some embodiments, the bleed system is the bleed system 60 shown and described with reference to FIGS. 2A, 2B, 2C. In some embodiments, the sump system is the sump system 168 described with reference to FIGS. 3 and 4. The bleed system is in fluid communication with a compressor section of the engine core. The gas supplied to at least one of the bleed system or the sump system after the cleaning operation to dry the bleed system or the sump system and remove residual cleaning fluid.

In some embodiments, the method comprises supplying the gas to the bleed system using a reverse bleed apparatus of the bleed system. The reverse bleed apparatus may comprise a cooling duct having an inlet and an outlet and a cooling blower. The outlet is in fluid communication with a compressor section of the engine core via a compressor bleed port. The cooling blower is operable to move a gas flow from the inlet of the cooling duct towards the outlet of the cooling duct and through the compressor bleed port. In some examples, the bleed system can be the bleed system 60 such that the cooling duct is the cooling duct 92 with inlet 94 and outlet 96 and the cooling blower is the cooling blower 106 of FIGS. 2A and 2C. In some embodiments, the source of pressurized gas is the cooling blower of the reverse bleed apparatus. In other embodiments, the method includes coupling an external gas supply system to the cooling blower of the reverse bleed apparatus to supply the gas into the bleed system during at least a portion of the cleaning operation.

In some embodiments, when the bleed system includes a reverse bleed apparatus, the method further includes removing the cooling blower from the reverse bleed apparatus to expose an access opening for the reverse bleed apparatus and coupling an external gas supply system to the access opening. In this manner, the gas is supplied to the bleed system through the cooling duct by the external gas supply system. The external gas supply system may be configured to deliver gas to the bleed system as is shown in FIGS. 2B and 2C. Further, the external gas supply system can be any of the external gas supply systems described here such as the external gas supply system 130 in FIG. 2B, as the external gas supply system 150 in FIG. 2C, as the external gas supply system 166 in FIG. 3 and 4, the external gas supply system 220 in FIG. 5, or the external gas supply system 240 in FIG. 6.

In some configurations, the method includes supplying the gas to at least one bleed duct that is in fluid communication with the outlet of the cooling duct using the cooling blower after the cleaning operation. The bleed duct can be one or more of the bleed duct(s) 74 of FIGS. 2A, 2B, 2C.

In some configurations, the bleed system comprises at least one bleed duct that is in fluid communication with the compressor section of the engine core. The at least one bleed duct may supply air from the compressor section of the engine core to at least one of an environmental control system (ECS), a pneumatically powered actuator, engine hot section cooling, or a clearance control system. The bleed duct can be one or more of the bleed duct(s) 74 of FIGS. 2A, 2B, 2C. In some embodiments, the method includes coupling the at least one bleed duct to an external gas supply system to supply the gas to the bleed system. Further, the external gas supply system can be any of the external gas supply systems described here such as the external gas supply system 130 in FIG. 2B, as the external gas supply system 150 in FIG. 2C, as the external gas supply system 166 in FIGS. 3 and 4, the external gas supply system 220 in FIG. 5, or the external gas supply system 240 in FIG. 6.

The sump system may be associated with a bearing of the gas turbine engine and is configured to supply and scavenge lubricating oil for the bearing. In some examples, the sump system is the sump system 168 described with reference to FIGS. 3 and 4.

In some embodiments, the method comprises supplying the gas through a sump vent. In some configurations, the sump system comprises a sump housing defining a sump chamber. The sump vent may be disposed through a shaft of the gas turbine engine and may be in fluid communication with the sump chamber. So configured, the gas can be supplied to the sump system through the sump vent. In some embodiments, the method comprises coupling an external gas supply to the sump vent to supply the gas into the sump system after the cleaning operation. The external gas supply system can be any of the external gas supply system described herein such as the external gas supply system 130 in FIG. 2B, as the external gas supply system 150 in FIG. 2C, or as the external gas supply system 166 in FIG. 3.

In some embodiments, the method comprises supplying the gas to the sump system using a sump drain line. In some configurations, the sump system comprises a sump housing defining a sump chamber. The sump drain line may be in in fluid communication with the sump chamber. The sump drain line is configured to drain oil from the sump chamber. So configured, the gas can be supplied to the sump system through the sump drain line. In some embodiments, the method comprises coupling an external gas supply system to the sump drain line to supply the gas into the sump system after the cleaning operation. The external gas supply system can be any of the external gas supply systems described herein such as the external gas supply system 130 in FIG. 2B, as the external gas supply system 150 in FIG. 2C, as the external gas supply system 166 in FIGS. 3 and 4, the external gas supply system 220 in FIG. 5, or the external gas supply system 240 in FIG. 6.

In some embodiments, the method includes supplying the gas to the sump system via a sump scavenge line. In some configurations, the sump system comprises a sump housing defining a sump chamber. The sump scavenge line may be in fluid communication with the sump chamber. The sump scavenge line is configured to collect and drain oil from the sump chamber. So configured, the gas can be supplied to the sump system through the sump scavenge line. In some embodiments, the method comprises coupling an external gas supply system to the sump scavenge line to supply the gas into the sump system after the cleaning operation. The external gas supply system can be any of the external gas supply systems described herein such as the external gas supply system 130 in FIG. 2B, as the external gas supply system 150 in FIG. 2C, as the external gas supply system 166 in FIGS. 3 and 4, the external gas supply system 220 in FIG. 5, or the external gas supply system 240 in FIG. 6.

It is contemplated that, in some approaches, the method can further include supplying the gas to at least one of the bleed system or the sump system during a cleaning operation. In this manner, the gas can further limit ingress of cleaning fluid into the sump system or the bleed system during the cleaning operation. Additionally, in some approaches, the gas can be supplied to at least one of the bleed system or the sump system at an elevated temperature to promote drying of such systems after the cleaning operation. In some aspects, the elevated temperature is in the range of about 55 degrees Celsius and about 80 degrees Celsius.

Further aspects of the disclosure are provided by the subject matter of the following clauses:
A method for cleaning an engine core of a gas turbine engine, the method comprising: performing a cleaning operation on the engine core by delivering a cleaning fluid to the engine core via at least one of an access port or an inlet to a compressor section of the gas turbine engine; and supplying a gas to at least one of a bleed system or a sump system of the gas turbine engine with a source of pressurized gas operable to propel the gas during at least a portion of the cleaning operation, wherein the bleed system and the sump system are in fluid communication with a compressor section of the engine core and the gas supplied limits ingress of the cleaning fluid into at least one of the bleed system or the sump system.

The method of any preceding clause, comprising supplying the gas to the bleed system using a reverse bleed apparatus of the bleed system, wherein reverse bleed apparatus comprises a cooling duct having an inlet and an outlet, the outlet in fluid communication with the compressor section of the engine core via a compressor bleed port, and a cooling blower operable to move a gas flow from the inlet of the cooling duct towards the outlet of the cooling duct and through the compressor bleed port.

The method of any preceding clause, wherein the source of pressurized gas is the cooling blower of the reverse bleed apparatus.

The method of any preceding clause, further comprising supplying the gas to at least one bleed duct that is in fluid communication with the outlet of the cooling duct using the cooling blower during at least a portion of the cleaning operation.

The method of any preceding clause, comprising coupling an external gas supply system to the cooling blower to supply the gas into the bleed system during at least a portion of the cleaning operation.

The method of any preceding clause, wherein the reverse bleed apparatus further comprises at least one valve disposed in the cooling duct, and wherein the method further comprises opening the at least one valve in the reverse bleed apparatus while supplying the gas.

The method of any preceding clause, wherein the method further comprises: removing at least one of the cooling blower or a connector of the cooling duct from the reverse bleed apparatus to expose an access opening for the reverse bleed apparatus; and coupling an external gas supply system to the access opening, the external gas supply system including the source of pressurized gas, wherein the gas is supplied to the bleed system through the cooling duct by the external gas supply system.

The method of any preceding clause, wherein the source of pressurized gas comprises at least one of a gas compressor, a blower, or a microturbine.

The method of any preceding clause, wherein the gas is supplied at a temperature in the range of about 55 degrees Celsius to about 80 degrees Celsius.

The method of any preceding clause, wherein the bleed system comprises at least one bleed duct that is in fluid communication with the compressor section of the engine core, and wherein the method comprises coupling an external gas supply system to the at least one bleed duct to supply the gas to the bleed system.

The method of any preceding clause, comprising supplying air from the compressor section of the engine core to at least one of an environmental control system (ECS), a pneumatically powered actuator, engine hot section cooling, or a clearance control system via the at least one bleed duct.

The method of any preceding clause, comprising coupling the external gas supply system to the at least one bleed duct via a connector.

The method of any preceding clause, wherein the connector comprises at least one of a v-band clamp, a flange, a rubber boot, a hose clamp, or tape.

The method of any preceding clause, further comprising supplying the gas to the bleed system after the cleaning operation.

The method of any preceding clause, comprising supplying the gas to the bleed system at an elevated temperature following the cleaning operation.

The method of any preceding clause, wherein the sump system is associated with a bearing of the gas turbine engine and is configured to supply and scavenge lubricating oil for the bearing.

The method of any preceding clause, comprising supplying the gas to the sump system via a sump vent, wherein the sump system comprises a sump housing defining a sump chamber and wherein the sump vent is disposed through a shaft of the gas turbine engine and is in fluid communication with the sump chamber.

The method of any preceding clause, comprising coupling an external gas supply system to the sump vent to supply the gas into the sump system during at least a portion of the cleaning operation.

The method of any preceding clause, comprising supplying the gas to the sump system through a sump drain line, wherein the sump system comprises a sump housing defining a sump chamber and wherein the sump drain line is in fluid communication with the sump chamber, the sump drain line configured to drain oil from the sump chamber.

The method of any preceding clause, comprising coupling the sump drain line to an external gas supply system to supply the gas into the sump system during at least a portion of the cleaning operation.

The method of any preceding clause, supplying the gas to the sump system through a sump scavenge line, wherein the sump system comprises a sump housing defining a sump chamber and wherein the sump scavenge line is in fluid communication with the sump chamber, the sump scavenge line configured to collect and drain oil from the sump chamber.

The method of any preceding clause, comprising coupling an external gas supply system to the sump scavenge line to supply the gas into the sump system during at least a portion of the cleaning operation.

A method for cleaning an engine core of a gas turbine engine, the gas turbine engine comprising at least one of a bleed system in fluid communication with the engine core or a sump system in fluid communication with the engine core, the gas turbine engine defining an access port within the engine core, the method comprising: performing a cleaning operation on the engine core by delivering a cleaning fluid to the engine core via the least one of the access port or an inlet to a compressor section of the gas turbine engine; and supplying a gas to at least one of the bleed system or the sump system via a source of pressurized gas operable to propel the gas after the cleaning operation to reduce or eliminate remaining cleaning fluid in the engine core.

The method of any preceding clause, supplying the gas to the bleed system via a reverse bleed apparatus of the bleed system, the reverse bleed apparatus comprising a cooling duct having an inlet and an outlet, the outlet in fluid communication with a compressor section of the engine core via a compressor bleed port, and a cooling blower operable to move a gas flow from the inlet of the cooling duct towards the outlet of the cooling duct and through the compressor bleed port.

The method of any preceding clause, wherein the source of pressurized gas is the cooling blower of the reverse bleed apparatus.

The method of any preceding clause, wherein the method further comprises: removing at least one of the cooling blower or a connector of the cooling duct from the reverse bleed apparatus to expose an access opening for the reverse bleed apparatus; and coupling an external gas supply system to the access opening such that the gas is supplied to the bleed system through the cooling duct by the external gas supply system, the external gas supply system including the source of pressurized gas.

The method of any preceding clause, comprising supplying the gas to the sump system through a sump vent, wherein the sump system comprises a sump housing defining a sump chamber and wherein the sump vent is disposed through a shaft of the gas turbine engine, the sump vent in fluid communication with the sump chamber.

The method of any preceding clause, comprising supplying the gas to the sump system through a sump drain line, wherein the sump system comprises a sump housing defining a sump chamber and wherein the sump drain line is in fluid communication with the sump chamber, the sump drain line configured to drain oil from the sump chamber.

The method of any preceding clause, comprising supplying the gas to the sump system through a sump scavenge line, wherein the sump system comprises a sump housing defining a sump chamber and wherein the sump scavenge line is in fluid communication with the sump chamber, the sump scavenge line configured to collect and drain oil from the sump chamber.

The method of any preceding clause, wherein the gas is at an elevated temperature in the range of about 55 degrees Celsius to about 80 degrees Celsius.

The method of any preceding clause, further comprising: supplying the gas to at least one of the bleed system or the sump system during at least a portion of the cleaning operation to limit ingress of cleaning fluid into at least one of the bleed system or the sump system.

A system comprising: an engine comprising and engine core and a bleed system in fluid communication with the engine core, the bleed system including a reverse bleed apparatus, the reverse bleed apparatus comprising a cooling duct having an inlet and an outlet, the outlet in fluid communication with a compressor section of the engine core via a compressor bleed port, and a cooling blower operable to move a gas flow from the inlet of the cooling duct towards the outlet of the cooling duct and through the compressor bleed port; and a controller in operative communication with the cooling blower, wherein the controller is configured to supply a gas to the bleed system via the cooling blower during and/or after a cleaning operation performed on the engine. The system of any preceding clause, wherein the bleed system further comprises a bleed control valve disposed within a bleed duct, wherein the controller is further configured to open the bleed control valve during and/or after the cleaning operation.

The system of any preceding clause wherein the controller is also in operative communication with a wash system for the engine, the controller further configured to control at least one operating parameter of the wash system to perform the cleaning operation.

A system comprises: an engine comprising and engine core and a sump system in fluid communication with the engine core, the sump system comprising a sump housing defining a sump chamber and a sump vent, the sump vent disposed through a shaft of the gas turbine engine and in fluid communication with the sump chamber; an external gas supply system with a gas moving device, the gas external gas supply system coupled to and in fluid communication with the sump vent; and a controller in operative communication with the gas moving device, wherein the controller is configured to supply a gas to the sump system via the gas moving device during and/or after a cleaning operation performed on the engine.

The system of any preceding clause wherein the controller is also in operative communication with a wash system for the engine, the controller further configured to control at least one operating parameter of the wash system to perform the cleaning operation.

A system comprises: an engine comprising and engine core and a sump system in fluid communication with the engine core, the sump system comprising a sump housing defining a sump chamber and wherein the sump drain line is in fluid communication with the sump chamber, wherein sump drain line is configured to drain oil from the sump chamber; an external gas supply system with a gas moving device, the external gas supply system coupled to and in fluid communication with the sump drain line; and a controller in operative communication with the gas moving device, wherein the controller is configured to supply a gas to the sump system via the gas moving device during and/or after a cleaning operation performed on the engine.

The system of any preceding clause wherein the controller is also in operative communication with a wash system for the engine, the controller further configured to control at least one operating parameter of the wash system to perform the cleaning operation.

A system comprises: an engine comprising and engine core and a sump system in fluid communication with the engine core, the sump system comprising a sump housing defining a sump chamber and a sump scavenge line in fluid communication with the sump chamber, the sump scavenge line configured to collect and drain oil from the sump chamber; an external gas supply system with a gas moving device, the external gas supply system coupled to and in fluid communication with the sump scavenge line; and a controller in operative communication with the gas moving device, wherein the controller is configured to supply a gas to the bleed system via the gas moving device during and/or after a cleaning operation performed on the engine.

The system of any preceding clause wherein the controller is also in operative communication with a wash system for the engine, the controller further configured to control at least one operating parameter of the wash system to perform the cleaning operation.

## Claims

1. A method for cleaning an engine core (51) of a gas turbine engine (10), the method comprising:
performing a cleaning operation on the engine core (51) by delivering a cleaning fluid to the engine core (51) via at least one of access port (50) or an inlet (18) to a compressor section (20, 22) of the gas turbine engine (10); and
supplying a gas to at least one of a bleed system (60) or a sump system (168) of the gas turbine engine (10) with a source of pressurized gas operable to propel the gas during at least a portion of the cleaning operation, wherein the bleed system (60) is in fluid communication with a compressor section (20, 22) of the engine core (51) and the gas supplied limits ingress of the cleaning fluid into at least one of the bleed system (60) or the sump system (168).

2. The method of claim 1, comprising supplying the gas to the bleed system (60) using a reverse bleed apparatus (90) of the bleed system (60), wherein the reverse bleed apparatus (90) comprises a cooling duct (92) having an inlet (94) and an outlet (96), the outlet (96) in fluid communication with the compressor section (20, 22) of the engine core (51) via a compressor bleed port (72), and a cooling blower (106) operable to move a gas flow from the inlet (94) of the cooling duct (92) towards the outlet (96) of the cooling duct (92) and through the compressor bleed port (72).

3. The method of claim 2, wherein the source of pressurized gas is the cooling blower (106) of the reverse bleed apparatus (90).

4. The method of claim 3, further comprising supplying the gas to at least one bleed duct (74) that is in fluid communication with the outlet (96) of the cooling duct (92) using the cooling blower (106) during at least a portion of the cleaning operation.

5. The method of claim 2, comprising coupling an external gas supply system (240) (130) to the cooling blower (106) to supply the gas into the bleed system (60) during at least a portion of the cleaning operation.

6. The method of claim 2, wherein the reverse bleed apparatus (90) further comprises at least one valve disposed in the cooling duct (92), and wherein the method further comprises opening the at least one valve in the reverse bleed apparatus (90) while supplying the gas.

7. The method of claim 2, wherein the method further comprises:
removing at least one of the cooling blower (106) or a connector of the cooling duct (92) from the reverse bleed apparatus (90) to expose an access opening (142) for the reverse bleed apparatus (90); and
coupling an external gas supply system (130) to the access opening (142), the external gas supply system (130) including the source of pressurized gas,
wherein the gas is supplied to the bleed system (60) through the cooling duct (92) by the external gas supply system (130).

8. The method of any preceding claim, wherein the bleed system (60) comprises at least one bleed duct (74) that is in fluid communication with the compressor section (20, 22) of the engine core (51), and wherein the method comprises coupling an external gas supply system (150) to the at least one bleed duct (74) to supply the gas to the bleed system (60).

9. The method of claim 8, comprising supplying air from the compressor section (20, 22) of the engine core (51) to at least one of an environmental control system (ECS), a pneumatically powered actuator, engine hot section cooling, or a clearance control system via the at least one bleed duct (74).

10. The method of any preceding claim, comprising supplying the gas to the sump system (168) via a sump vent (184), wherein the sump system (168) comprises a sump housing (172) defining a sump chamber (170) and wherein the sump vent (184) is disposed through a shaft (182) of the gas turbine engine (10) and is in fluid communication with the sump chamber (170).

11. The method of claim 9, comprising coupling an external gas supply system (240) (220) (166) (150) (130) to the sump vent (184) to supply the gas into the sump system (168) during at least a portion of the cleaning operation.

12. The method of claim 1, comprising supplying the gas to the sump system (168) through a sump drain line (198), wherein the sump system (168) comprises a sump housing (172) defining a sump chamber (170) and wherein the sump drain line (198) is in fluid communication with the sump chamber (170), the sump drain line (198) configured to drain oil from the sump chamber (170).

13. A system comprising:
an engine (10) comprising and engine core (51) and a bleed system (60) in fluid communication with the engine core (51), the bleed system (51) including a reverse bleed apparatus (90), the reverse bleed apparatus (90) comprising a cooling duct (92) having an inlet (94) and an outlet (96), the outlet (96) in fluid communication with a compressor section (62) of the engine core (51) via a compressor bleed port (72), and a cooling blower (106) operable to move a gas flow from the inlet (94) of the cooling duct (92) towards the outlet (96) of the cooling duct (92) and through the compressor bleed port (72); and
a controller (270) in operative communication with the cooling blower (106), wherein the controller is configured to supply a gas to the bleed system (60) via the cooling blower (106) during and/or after a cleaning operation performed on the engine (10).

14. The system of claim 13, wherein the bleed system (60) further comprises a bleed control valve disposed within a bleed duct (74), wherein the controller (270) is further configured to open the bleed control valve during and/or after the cleaning operation

15. The system of any of claim 13-14, wherein the controller (270) is also in operative communication with a wash system (52) for the engine (10), the controller (270) further configured to control at least one operating parameter of the wash system (52) to perform the cleaning operation.
